# EUROPEAN PATENT SPECIFICATION

(11) **EP 3 482 942 B1**
(45) Date of publication and mention of the grant of the patent: **15.02.2023**
(21) Application number: 17823622.0
(22) Date of filing: 05.07.2017
(51) Int. Cl.: B65H 29/04, B41F 21/08, B41F 19/00

(54) **DIE-CUTTING MACHINE COMPRISING GRIPPER BAR POSITIONING DEVICE**
STANZMASCHINE UMFASSEND GREIFERSTANGENPOSITIONIERUNGSVORRICHTUNG
MACHINE DE DÉCOUPAGE COMPRENANT UN DISPOSITIF DE POSITIONNEMENT DE BARRE DE PRÉHENSION

(30) Priority: 07.07.2016 CN 201610529050; 07.07.2016 CN 201610529416; 08.05.2017 CN 201710318477; 08.05.2017 CN 201720505532 U; 08.05.2017 CN 201710318827; 08.05.2017 CN 201720504764 U; 29.06.2017 CN 201710511124; 29.06.2017 CN 201720770638 U
(43) Date of publication of application: 15.05.2019
(73) Proprietor: Masterwork Group Co., Ltd., Beichen Science and Technology Area Tianjin 300400 (CN)
(72) Inventor: WEI, Shuyuan, Tianjin 300400 (CN); LIU, Dong, Tianjin 300400 (CN); MA, Jinghu, Tianjin 300400 (CN)
(74) Representative: Strehl Schübel-Hopf & Partner
(86) International application number: PCT/CN2017/091787
(87) International publication number: WO 2018/006810

(56) References cited:
- CN-A- 1 613 660
- CN-A- 105 966 058
- CN-A- 106 183 394
- CN-B- 101 537 937
- CN-U- 203 472 277
- CN-U- 204 487 686
- CN-U- 205 836 221
- CN-U- 205 836 224
- US-A- 2 850 280
- US-A- 2 950 915
- US-A- 4 362 105
- US-A- 4 470 593
- US-A- 5 396 842
- US-A1- 2012 250 062

## Description

### FIELD

The present invention relates to a die-cutting machine comprising a gripper bar positioning device.

### BACKGROUND TECHNIQUE

The multiple sets of die cutting and stamping device (CN 1613660 A) currently available in the market uses the multiple sets of die pressing units and aluminum foil controlling unit to complete the required multiple stamping (or indentation) and die-cutting work, which greatly improves the production efficiency and shortens the production cycle. However, since the paper conveyed by the device is usually conveyed by a plurality of gripper bars which are parallelly disposed, the gripper bars grip the papers that enter each unit station in a closed cycle trajectory to perform molding work. The deformation of chain occurs due to the long-closed chain and the frequent changes in tension and direction during long-term use, and the cumulative error of the chain greatly reduces the processing accuracy of the equipment. For the unavoidable errors caused by the chain deformation, the existing positioning device cannot be fine-tuned in a timely manner, and the positioning error directly affects the subsequent processing accuracy. To ensure the accuracy and quality of paper processing, frequent shut-down and adjustment is required. This adjustment method takes time and efforts, reduces the efficiency of the device, and increases labor costs. In addition, when the device has a multi-unit workstation, it is often necessary to perform calibration and fine-tuning of each workstation positioning device in turn, and the positioning of the paper is tedious and inaccurate.

U.S. Pat. No. 2,950,915 A to Frank Golding William describes a sheet feed and registration apparatus comprising a fixed platen, a movable platen, two parallel endless chains, a supporting bar extending transversely between said chains the bar being provided with means for gripping a sheet, substantially rectilinear tracks positioned to support the chains during a run including the passage of the bar from one operating position through between the platens to another operating position, said chains being driven with an intermittent motion timed for the bar to stand still when situated in the operating positions, a guide element connected to a link of each of the chains, the guide elements being engaged by the ends of the bar and being dimensioned to guide the bar for rectilinear movement parallel to the pitch line of the chains, and positioning means provided at each operating position of the bar and cooperating to move the bar along the guide elements into a sheet registering position.

U.S. Pat. No. 2,850,280 A to Kalbermatten Bruno De describes a machine for operating on sheets comprising gripper bars for gripping the sheets, chains for moving the gripper bars via a determinable path in a given direction, spaced drums for driving the chains, drive means for driving the drums, and coupling means for cyclically coupling at least one of said drums to said drive means in order to move the gripper bars to the reference line sequentially in cycles: the positioning mechanism comprising abutments cyclically intercepting the determinable path of the gripper bars at the reference line and supplementary drive means coupled to said drive means for efiecting a cyclic supplementary drive to the chains in the given directon to urge the gripper bars against said abutments.

CN101537937A to Tianjin Changrong Printing Euqipment Co. Ltd. describes a gripper with a location adjusting device comprising a chain, a gripper body and a dental plate, characterized in further comprising a sliding sleeve, a spring, an alignment pin, a fixed sleeve, an adjusting pad, a spacer, a lock nut, a threaded sleeve, a connection block and a contiguous block, wherein the gripper body is located between the opening of the connection block; the alignment pin is passed through the gripper body and the connection block, wherein the part of alignment pin in the gripper body and the connection block is provided with the spring, the sliding sleeve and the fixed sleeve, and the spring is located between sliding sleeve and fixed sleeve; one end of the fixed sleeve is connected with the connection block, and one end of the sliding sleeve is connected with the contiguous block; spring, sliding sleeve and fixed sleeve are all placed in the contiguous block, the part of the alignment pin protruding from the contiguous block is covered by the threaded sleeve to form a threaded connection, and the end of the alignment pin, i.e. the outside of the threaded sleeve, is threaded into and connected with the lock nut; the outer circle of the threaded sleeve is connected to the hole of the connection block; on the end face of the alignment pin that can be adjusted left and right two locating surfaces are arranged, wherein the first locating surface is a part of the end face of the alignment pin, and the second locating surface is the surface of the spacer with the adjusting pad installed on another part of the end face of the alignment pin.

U.S. Pat. No. 2012/0,250,062 A1 to WANG YUXIN [CN] ET AL describes a printing device for producing finished product by one-pass sheet-feed comprising a sheet-conveying unit, a stamping-control unit, a die-cutting unit, a waste edges removing unit, a blanking unit, a waste removing unit, and a conveying mechanism, the conveying mechanism is configured to transfer a sheet to each unit through the stamping-control unit, the die-cutting unit, the waste edges removing unit, the blanking unit and the waste removing unit, wherein the conveying mechanism comprises: a gripper bar; and a gripper bar chain, wherein the sheet-conveying unit transfers a single sheet to the position where the gripper bar may grip the sheet.

US 4,470,593 discloses a stripping unit positioning module disposed at the output end of a stripping unit, wherein a reference axis of a positioning swing rod cooperates with the positioning surface disposed behind a gripper bar.

Because the prior art is that the positioning direction of the gripper bar coincides with the moving direction of the paper, when the gripper bar stops moving, the positioning block of the die-cutting machine will resist against the positioning surface of the gripper bar along the moving direction of the sheet, which results in a certain amount of gap between the gripper bar and the gripper bar connectors. When the chain is stretched after long-term use, the positioning block of the die-cutting machine needs to overcome the amount of stretching of the chain firstly, then to position the gripper bar. If the chain has a large amount of stretching, the positioning of the gripper bar will not be in place (there will be no gaps), and the chain must be replaced with a new one. When the gripper bar is ready to move, the gripper bar moves in the opposite direction of the moving direction of the paper first before it moves forward, which easily causes the phenomenon that paper scatters inside the die-cutting machine and causes an alarm and shutdown.

### SUMMARY

The object of the present invention is to overcome the disadvantages existing in the gripper bar positioning device in the prior art, and to provide a die-cutting machine comprising a gripper bar positioning device with a simple structure and excellent.

The present invention provides a die-cutting machine comprising a gripper bar positioning device, a gripper bar disposed on a chain, a stripping unit, and at least two sets of die-cutting units, the papers passing through the die-cutting units transported by the gripper bar, characterized in that the gripper bar positioning device comprises a front positioning module, a rear positioning module and a stripping unit positioning module; the front positioning module is disposed at the input end of the first set of die-cutting unit, the rear positioning module is disposed at the output end of each die-cutting unit, the stripping unit positioning module is disposed at the output end of the stripping unit, the front positioning module, the rear positioning module, the stripping unit positioning module each comprising a positioning swing rod, the reference plane of the positioning swing rod of the front positioning module cooperating with the positioning surface disposed behind the gripper bar, the reference axis of the positioning swing rod of the rear positioning module and the stripping unit positioning module cooperating with the positioning surface disposed behind the gripper bar.

According to an embodiment of the die-cutting machine of the present invention described above, the front positioning module comprises a driving cam, a driving swing rod, a leverage, a tension spring, a positioning swing rod, a rotation shaft, a reference plane and a bearing.

According to an embodiment of the die-cutting machine of the present invention described above, the driving cam of the front positioning module is being driven in cooperation with the bearing, one end of the driving swing rod disposed on the bearing, another end connected to one end of the leverage, the other end connected to the die-cutting machine; one end of the tension spring connected to the leverage, the other end fixed to the die-cutting machine; the other end of the leverage connected to one end of the positioning swing rod, the positioning swing rod disposed on the rotation shaft, the other end of the positioning swing rod provided with the reference plane which cooperates with the positioning surface of the gripper bar.

According to an embodiment of the die-cutting machine of the present invention described above, the rear positioning module comprises a first set of rear positioning module disposed at the output end of the first set of die-cutting unit and a second set of rear positioning module disposed at the output end of the second set of die-cutting unit.

According to an embodiment of the die-cutting machine of the present invention described above, the first set of rear positioning module comprises a driving unit, a leverage and a swinging unit; the driving unit comprising a driving cam, a driving swing rod and a driving bearing; the swing unit comprising a first swing rod, a second swing rod, a first swing leverage, a second swing leverage, a positioning leverage, a positioning swing rod, a swing tension spring, a positioning block and a positioning tension spring; a reference axis disposed on the positioning swing rod.

According to an embodiment of the die-cutting machine of the present invention described above, the driving cam is being driven in cooperation with the driving bearing; one end of the driving swing rod connected to the driving bearing, the other end of the driving swing rod connected to one end of the leverage; the other end of the leverage connected to one end of the first swing rod, another end of the first swing rod connected to one end of the first swing leverage, the other end of the first swing rod connected to the positioning tension spring; the other end of the first swing leverage connected to one end of the second swing leverage, the other end of the second swing leverage connected to the positioning leverage and the second swing rod at the same time, the other end of the positioning leverage connected to one end of the positioning swing rod, the other end of the positioning swing rod connected to the positioning block, the positioning block fixed on the die-cutting machine, one end of the swing tension spring connected to the second swing rod, the other end of the swing tension spring connected to the die-cutting machine, the positioning swing rod cooperating with the positioning surface behind the gripper bar through the reference axis.

According to an embodiment of the die-cutting machine of the present invention described above, the second set of rear positioning module comprises a drive unit, a drive leverage, a swing unit, a positioning leverage and a positioning swing rod; the drive unit comprising a driving cam, a driving swing rod and a driving bearing; the swing unit comprising a first swing rod, a second swing rod , a third swing rod, a swing leverage, a swing tension spring and a swing rod tension spring, a reference axis and a positioning block disposed on the positioning swing rod.

According to an embodiment of the die-cutting machine of the present invention described above, the driving cam is being driven in cooperation with the driving bearing; one end of the driving swing rod connected to the driving bearing, the other end of the driving swing rod connected to one end of the drive leverage, the other end of the drive leverage connected to one end of the first swing rod, the other end of the first swing rod connected to one end of the second swing rod, the other end of the second swing rod connected to one end of the swing leverage, the other end of the swing leverage connected to one end of the positioning leverage and one end of the third swing rod at the same time, the other end of the positioning leverage connected to one end of the positioning swing rod, one end of the swing tension spring connected to the first swing rod, the other end of the swing tension spring connected to the die-cutting machine; the lower end of the swing rod tension spring connected to the other end of the third swing rod, the upper end of the swing rod tension spring fixed to the die-cutting machine, the positioning swing rod cooperating with the positioning surface disposed behind the gripper bar through the reference axis.

According to the an embodiment of the die-cutting machine of the present invention described above, the stripping unit positioning module comprises a stripping drive unit, a swing unit and a stripping positioning unit; the stripping drive unit comprising a driving cam, a stripping driving swing rod and a stripping driving bearing; the swing unit comprises a first stripping leverage, a second stripping leverage, a third stripping leverage, a first stripping swing rod, a second stripping swing rod, a third stripping swing rod, a first stripping tension spring and a second stripping tension spring; the stripping positioning unit comprises a stripping positioning leverage and a stripping positioning swing rod; the reference axis disposed on the stripping positioning swing rod.

According to an embodiment of the die-cutting machine of the present invention described above, the driving cam comprised in the stripping drive unit of the stripping unit positioning module is being driven in cooperation with the stripping driving bearing; one end of the stripping driving swing rod connected to the stripping driving bearing, the other end of the stripping driving swing rod connected to one end of the first stripping leverage, the other end of the first stripping leverage connected to one end of the first stripping swing rod, the other end of the first stripping swing rod connected to one end of the second stripping leverage, the other end of the second stripping leverage connected to one end of the second stripping swing rod, the other end of the second stripping swing rod connected to one end of the third stripping leverage, the other end of the third stripping leverage connected to one end of the third stripping swing rod, the other end of the third stripping swing rod connected to the stripping positioning leverage, the other end of the stripping positioning leverage connected to one end of the stripping positioning swing rod, one end of the first stripping tension spring connected to one end of the third positioning swing rod, the other end of the first stripping tension spring connected to the die-cutting machine; the upper end of the second stripping tension spring connected to one end of the first stripping swing rod, the lower end of the second stripping tension spring fixed to the die-cutting machine, the gripper bar provided with the gripper bar positioning surface which is cooperatively used with the reference axis of the positioning swing rod.

According to an embodiment of the die-cutting machine of the present invention described above, the die-cutting machine further comprises successively-connected paper-conveying units, the connection units between the die-cutting units, a product finished unit and a waste edge conveying unit.

The gripper bar positioning device of the die-cutting machine of the present invention is suitable for die-cutting machine. When the positioning block of the die-cutting machine removes the positioning surface of the gripper bar, since the chain has not yet started to move, the gripper bar moves forward along the moving direction of the paper. This movement direction is consistent with the moving direction of the paper, which will greatly reduce the risk of paper scattering inside the die-cutting machine and will be more conducive to the use of the die-cutting machine under the high-speed operation. When the chain is stretched after a long period of use, the original structure needs to overcome the amount of stretch of the chain before it can be positioned. When the chain has the amount of stretch is great, the chain needs to be replaced. The new structure can be successfully positioned without the need to overcome the amount of stretch of the chain, improving the applicability of the gripper bar and extending the service life of the chain.

### BRIEF DESCRIPTION OF DRAWINGS

Figure 1 is a schematic structural diagram of a front positioning module for a die-cutting machine including at least two sets of die-cutting units according to an embodiment of the present invention;
Figure 2 is a schematic diagram of a first set of rear positioning module for a die-cutting machine including at least two sets of die-cutting units according to an embodiment of the present invention;
Figure 3 is a schematic structural diagram of a second set of rear positioning module for a die-cutting machine including at least two sets of die-cutting units according to an embodiment of the present invention;
Figure 4 is a schematic structural diagram of a stripping unit positioning module for a die-cutting machine including at least two groups of die-cutting units according to an embodiment of the present invention.

### DETAILED DESCRIPTION

In order to better illustrate the present invention, the technical solutions in the embodiments of the present invention will be described clearly and completely in combination with the accompanying figures in the embodiments of the present invention.

The present invention provides a die-cutting machine comprising a gripper bar positioning device, a gripper bar disposed on a chain, a stripping unit, and at least two sets of die-cutting units. The paper passing through the die-cutting units is transported by the gripper bar, wherein the gripper bar positioning device comprises a front positioning module, a rear positioning module and a stripping unit positioning module; the front positioning module is disposed at an input end of the first set of die-cutting unit, the rear positioning module is disposed at the output end of each die-cutting unit, and the stripping unit positioning module is disposed at the output end of the stripping unit. The front positioning module, the rear positioning module, and the stripping unit positioning module each comprise a positioning swing rod rotating on a rotation shaft , the reference plane 10 of the positioning swing rod of the front positioning module cooperates with the positioning surface 9 disposed behind the gripper bar, and the reference axis of the positioning swing rod of the rear positioning module and the stripping unit positioning module cooperates with the positioning surface 9 disposed behind the gripper bar.

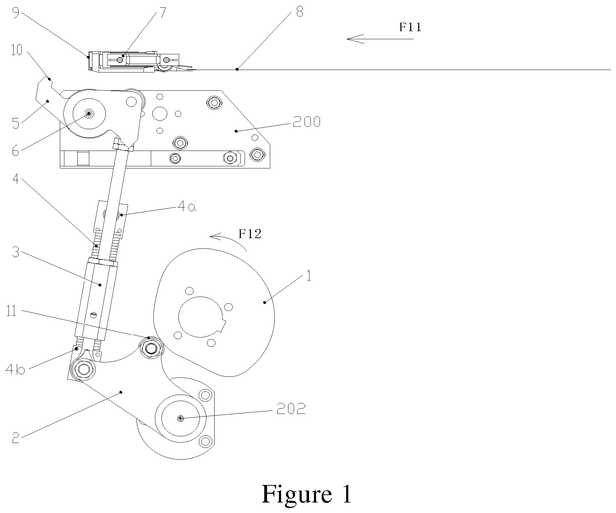

Figure 1 is a schematic structural diagram of a front positioning module for a die-cutting machine including at least two sets of die-cutting units according to an embodiment of the present invention. As shown in Figure 1, wherein the front positioning module comprises a driving cam 1, a driving swing rod 2, a leverage 3, a tension spring 4, a positioning swing rod 5, a rotation shaft 6, a reference plane 10 and a bearing 11. The driving cam 1 of the front positioning module is driven in cooperation with a bearing 11, one end of the driving swing rod 2 is disposed on the bearing 11, another end is connected to one end of the leverage 3, the other end is connected to the die-cutting machine through the bearing 202; one end 4b of the tension spring 4 is connected to the leverage 3, the other end 4a is fixed to the die-cutting machine; the other end of the leverage 3 is connected to one end of the positioning swing rod 5, the positioning swing rod 5 is disposed on the rotation shaft 6, the rotation shaft 6 is fixed on the fixed block 200; the other end of the positioning swing rod 5 is provided with a reference plane 10 that matches the positioning surface 9 of the gripper bar. The papers 8 are located on the gripper bar 7. The two ends of the gripper bar 7 are fixed on two closed and parallel drive chains. In the Figure, F11 refers to the moving direction of the paper, and the direction indicated by the arrow is the front of the moving paper, and the opposite direction of the arrow is the rear of the moving paper; F12 refers to the direction of the counterclockwise rotation of the driving cam 1.

Before positioning: the driving cam 1 and the bearing 11 are in close contact with each other for tangential movement. When the driving cam 1 rotates counterclockwise to move toward the high point of the cam, the contact surface between the bearing 11 and the driving cam 1 will change, and the leverage 3 is driven to move downwards under the driving of the driving rod 2. The leverage 3 drives the positioning leverage 5 to rotate clockwise about the rotation shaft 6, so that the reference plane 10 moves upwards and is ready to start positioning.

During Positioning: The driving cam 1 and the bearing 11 are in close contact with each other for tangential movement. When the driving cam 1 rotates counterclockwise to the highest point of the cam, the contact surface between the bearing 11 and the driving cam 1 will change, and the leverage 3 is driven to move downwards under the driving of the driving rod 2. The leverage 3 drives the positioning leverage 5 to rotate clockwise about the rotation shaft 6, so that the reference plane 10 moves up to the highest point, and the positioning thereof is completed, and is waiting for the positioning surface 9 of the gripper bar 7 to come into contact with it.

After positioning: the driving cam 1 and the bearing 11 move tangentially in close contact with each other. When the driving cam 1 rotates counterclockwise to move toward the cam low point, the contact surface between the bearing 11 and the driving cam 1 will change accordingly. And the leverage 3 is driven to make an upward movement under the driving of the driving rod 2, the leverage 3 drives the positioning leverage 5 to rotate counterclockwise about the rotation shaft 6, so that the reference plane 10 moves downwards and is separated from the positioning surface 9 of the gripper bar 7 so as to give a space such that the gripper bar 7 can move forward.

Wherein the rear positioning module comprises a first set of rear positioning module disposed at the output end of the first set of die-cutting unit and a second set of rear positioning module disposed at the output end of the second set of die-cutting unit.

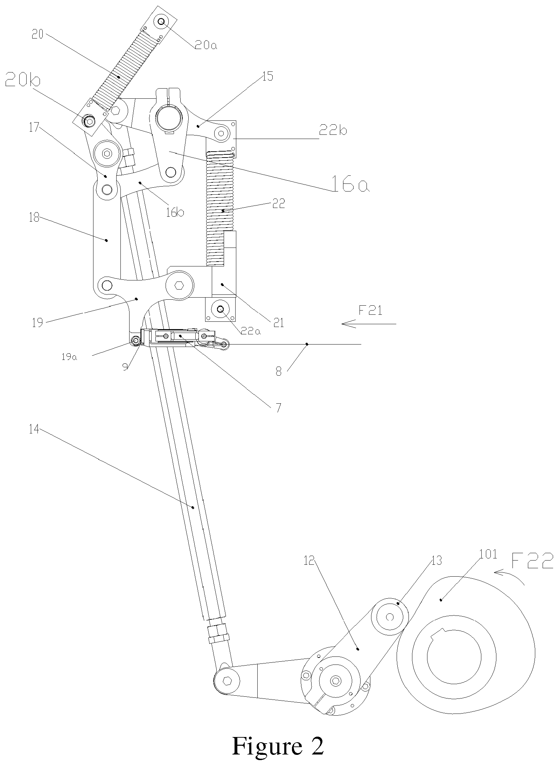

Figure 2 is a schematic diagram of a first set of rear positioning module for a die-cutting machine including at least two sets of die-cutting units according to an embodiment of the present invention. As shown in Figure 2, the first set of rear positioning module comprises a driving unit, a leverage 14 and a swinging unit; the driving unit comprises a driving cam 101, a driving swing rod 12 and a driving bearing 13; the swing unit comprises a first swing rod 15, a second swing rod 17, a first swing leverage 16a, a second swing leverage 16b, a positioning leverage 18, a positioning swing rod 19, a swing tension spring 20, a positioning block 21 and a positioning tension spring 22. The driving cam 101 is driven in cooperation with the driving bearing 13; one end of the driving swing rod 12 is connected to the driving bearing 13, the other end is connected to one end of the leverage 14; the other end of the leverage 14 is connected to one end of the first swing rod 15, another end of the first swing rod 15 is connected to one end of the first swing leverage 16a, the other end of the first swing rod 15 is connected to one end 22b of the positioning tension spring 22, the other end 22a of the positioning tension spring 22 is fixed to the die-cutting machine, the other end of the first swing leverage 16a is connected to one end of the second swing leverage 16b, the other end of the second swing leverage 16b is connected to the positioning leverage 18 and the second swing rod 17 at the same time, the other end of the positioning leverage 18 is connection with one end of the positioning swing rod 19, the other end of the positioning swing rod 19 is connected to the positioning block 21, the positioning block 21 is fixed on the die-cutting machine. One end 20b of the swing tension spring 20 is connected to the second swing rod 17, and one end 20a of the swing tension spring 20 is connected to the die-cutting machine. The positioning swing rod 19 is provided with a reference axis 19a, the positioning swing rod 19 cooperates with positioning surface 9 which disposed on the rear of the gripper bar 7 through the reference axis 19a thereon. The papers 8 are on the gripper bar 7. In the figure, F21 refers to the moving direction of the paper, and the direction indicated by arrow F21 is the front of the moving paper, and the opposite direction of the arrow F21 is the rear of the moving paper, and F22 refers to the direction of the counterclockwise rotation of the driving cam 101.

Before positioning: the driving cam 101 rotates counterclockwise toward the cam low point, the contact surface of the driving bearing 13 and the driving cam 101 will change, and the leverage 14 is driven to move upwards under the driving of the driving swing rod 12, the leverage 14 drives the first swing rod 15 to rotate clockwise, and the first swing rod 15 drives the second swing rod 17 and the positioning leverage 18 to move leftward through the first swing leverage 16a, so that the positioning swing rod 19 moves downward and is ready to start positioning.

During positioning: when the driving cam 101 rotates counterclockwise to the lowest point of the cam, the contact surface between the driving bearing 13 and the driving cam 101 will change, and the driving swing rod 12 drives the leverage 14 to move up to the highest point. The leverage 14 drives the first swing rod 15 to rotate clockwise, and the first swing rod 15 drives the second swing rod 17 and the positioning leverage 18 to move leftward through the first swing leverage 16a, so that the positioning swing rod 19 moves downwards to the lowest point, positioning thereof is completed, and is waiting for the gripper bar to come into contact with it.

After positioning: the driving cam 101 rotates counterclockwise to move toward the high point of the cam, and the contact surface between the driving bearing 13 and the driving cam 101 changes accordingly. The driving swing rod 12 drives the leverage 14 to move downward. An swing rod 15 rotates counterclockwise under the driving of the leverage 14, and the first swing rod 15 drives the second swing rod 17 and the positioning leverage 18 to move to the right through the first swing leverage 16a, so that the positioning swing rod 19 moves upwards to separate the positioning axis from the positioning surface of the gripper bar 7 disengaged so as to give a space such that the gripper bar 7 can move forward.

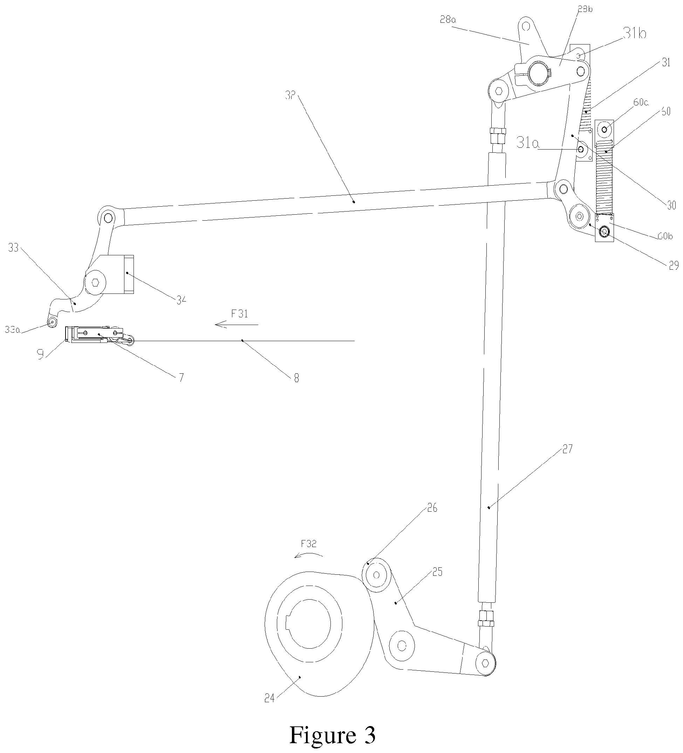

Figure 3 is a schematic structural diagram of a second set of rear positioning module for a die-cutting machine including at least two sets of die-cutting units according to an embodiment of the present invention. As shown in figure 3, the second set of rear positioning module comprises a drive unit, a drive leverage 27, a swing unit, a positioning leverage 32 and a positioning swing rod 33 which are connected in turn; the drive unit comprises a driving cam 24, a driving swing rod 25 and a driving bearing 26; the swing unit comprises a first swing rod 28a, a second swing rod 28b, a third swing rod 29, a swing leverage 30, a swing tension spring 31 and a swing rod tension spring 60, and a reference axis 33a is disposed on the positioning swing rod 33; and there is a positioning block 34 disposed on the positioning swing rod 33. The driving cam 24 is driven in cooperation with the driving bearing 26; and one end of the driving swing rod 25 is connected to the driving bearing 26, and the other end of the driving swing rod 25 is connected to one end of the drive leverage 27, and the other end of the driving leverage 27 is connected to one end of the first swing rod 28a; and the other end of the first swing rod 28a is connected to one end of one end of the second swing rod 28b; and the other end of the second swing rod 28b is connected to one end of the swing leverage 30; and the other end of the swing leverage 30 is connected to one end of the positioning leverage 32 and one end of the third swing rod 29 at the same time, and the other end of the positioning leverage 32 is connected to one end of the positioning swing rod 33. One end 31b of the swing tension spring 31 is connected to the first swing rod 28a, and the other end 31a of the swing tension spring 31 is connected to the die-cutting machine; and the lower end 60b of the swing rod tension spring 60 is connected to the other end of the third swing rod 29, and the upper end 60a is fixed to the die-cutting machine. The driving cam and the bearing are always in close contact with each other through the restoring force of the tension spring so as to avoid the separation phenomenon. The reference axis 33a of the positioning swing rod 33 cooperates with the positioning surface 9 disposed behind the gripper bar 7. The papers 8 are located on the gripper bar 7. In the figure, F31 refers to the moving direction of the paper, and the direction indicated by the arrow F31 refers to the front of the moving paper, and the opposite direction to the arrow F31 refers to the rear of the moving paper, and F32 refers to the counterclockwise rotation of the driving cam 24.

Before positioning: the driving cam 24 rotates counterclockwise moving to the low point of the cam, the contact surface between the driving bearing 26 and the driving cam 24 changes accordingly, the driving swing rod 25 drives the leverage 27 to move upwards. And the driving leverage 27 drives the first swing rod 28a and the second swing rod 28b to rotate clockwise, the first swing rod 28a and the second swing rod 28b drive the third swing rod 29 to rotate counterclockwise through the swing rod 30. The third swing rod 29 rotates the positioning swing rod 33 to rotate counterclockwise through the positioning leverage 32 and be ready to start the positioning.

During positioning: when the driving cam 24 rotates counterclockwise to the low point of the cam, and the contact surface between the driving bearing 26 and the driving cam 24 will change. The driving swing rod 25 drives the drive the driving leverage 27 to the highest point and the driving leverage 27 drives the first swing rod 28a and the second swing rod 28b to rotate clockwise. The first swing rod 28a and the second swing rod 28b drive the third swing rod 29 to rotate counterclockwise through the second swing leverage 30. The third swing rod 29 drives the positioning swing rod 33 to rotate counterclockwise to the lowest point through the positioning the leverage 32, the positioning is completed, and is waiting for the gripper bar 7 to come into contact with it.

After positioning: the driving cam 24 rotates counterclockwise to move toward the highest point of the cam. The contact surface between the driving bearing 26 and the driving cam 24 will change and the driving leverage 27 is driven to move downwards under the driving of the driving swing rod 25. The leverage 27 drives the first swing rod 28a and the second swing rod 28b to rotate counterclockwise and the first swing rod 28a and the second swing rod 28b drive the third swing rod 29 to rotate clockwise through the second swing leverage 30. The third swing rod 29 drives the positioning swing rod 33 to rotate clockwise through the positioning leverage 32 to separate the positioning swing rod 33 from the positioning surface of the gripper bar 7 so as to give a space such that the gripper bar 7 can move forward.

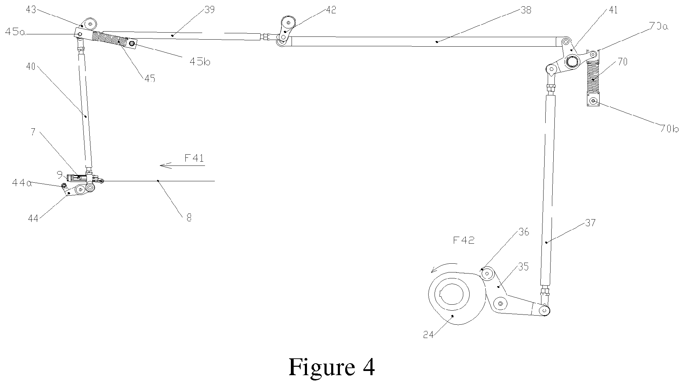

As shown in Figure 4, the stripping unit positioning module comprises a stripping drive unit, a swing unit and a stripping positioning unit. The stripping drive unit comprises a driving cam 24, a stripping driving swing rod 35 and a stripping driving bearing 36. The swing unit comprises a first stripping leverage 37, a second stripping leverage 38, a third stripping leverage 39, a first stripping swing rod 41, and a second stripping swing rod 42, a third stripping swing rod 43, a first stripping tension spring 45 and a second stripping tension spring 70. The stripping positioning unit comprises a stripping positioning leverage 40 and a stripping positioning swing rod 44. The reference axis 44a is set on the stripping positioning swing rod 44. The driving cam 24 of the stripping drive unit of the stripping unit positioning module is driven in cooperation with the stripping driving bearing 36. One end of the stripping driving swing rod 35 is connected to the stripping driving bearing 36, and the other end is connected to one end of the first stripping leverage 37, and the other end of the first stripping leverage 37 is connected to one end of the first stripping swing rod 41, and the other end of the first stripping swing rod 41 is connected to one end of the second stripping leverage 38, and the other end of the second stripping leverage 38 is connected to one end of the second stripping swing rod 42, and the other end of the second stripping swing rod 42 is connected to one end of the third stripping leverage 39, and the other end of the third stripping leverage 39 is connected to one end of the third stripping swing rod 43, and the other end of the third stripping swing rod 43 is connected to the stripping positioning leverage 40, and the other end of the stripping positioning leverage 40 is connected to one end of the stripping positioning swing rod 44, and the one end 45a of the first stripping tension spring 45 is connected to one end of the third positioning swing rod 43, and the other end 45b of the first stripping tension spring 45 is connected to the die-cutting machine. The upper end 70a of the second stripping tension spring 70 is connected to one end of the first stripping swing rod 41, and the lower end 70b is fixed to the die-cutting machine. The driving cam and the bearing are always in close contact with each other through the restoring force of the tension spring so as to avoid the separation phenomenon. The papers 8 are located on the gripper bar 7, and the gripper bar 7 is provided with a positioning surfaces 9 which is cooperated with the reference axis 44a a of the positioning swing rod 44. In the figure, F41 refers to the moving direction of the paper, and the direction indicated by arrow F41 is the front of the moving paper, and the opposite direction of arrow F41 is the rear of the moving paper; F42 refers to the counterclockwise rotation of driving cam 24. The driving cam used by the stripping positioning unit module and the second set of rear positioning module is the same driving cam 24.

Before positioning: the driving cam 24 and the stripping driving bearing 36 are in close contact with each other for tangential movement. When the driving cam 24 rotates counterclockwise and moves toward the low point of the cam, the contact surface between the stripping driving bearing 36 and the driving cam 24 will change accordingly. The first striping leverage 37 is driven upward under the driving of the stripping driving swing rod 35, and the first striping leverage 37 drives the first stripping swing rod 41 such that the first stripping swing rod 41 drives the second stripping leverage 38 and the third stripping leverage 39 to move to the right, and the third stripping leverage 39 drives the third stripping swing rod 43 so that the stripping positioning leverage 40 moves downwards. The leverage 40 drives the stripping and positioning swing rod 44 so that the left end of the stripping positioning swing rod 44 moves upwards and be ready to start positioning.

During positioning: when the driving cam 24 rotates counterclockwise to the low point of the cam, and the contact surface between the stripping driving bearing 36 and the driving cam 24 will change accordingly. The first stripping leverage 37 is driven under the driving of the stripping driving swing rod 35 to move up to the highest point. The first stripping leverage 37 drives the first stripping swing rod 41 so that the first stripping swing rod 41 drives the second stripping leverage 38 and the third stripping leverage 39 to move to the right to the maximum position. The third stripping leverage 39 drives the third stripping swing rod 43 so that the stripping positioning leverage 40 moves downward to the lowest point, and the stripping positioning leverage 40 drives the stripping positioning swing rod 44. The left end of the stripping positioning rod 44 moves upward to the highest point and the positioning is completed, and is waiting for the gripper bar to contact with it.

After positioning: the driving cam 24 continues to rotate counter-clockwise and moves toward the high point thereof. The contact surface between the stripping driving bearing 36 and the driving cam 24 will change accordingly. The stripping driving swing rod 35 drives the first stripping leverage 37 to move downwards. The first stripping leverage 37 drives the first stripping swing rod 41 so that the first stripping swing rod 41 drives the second stripping leverage 38 and the third stripping leverage 39 to move to the left. The third stripping leverage 39 drives the third stripping swing rod 43 so as to move the stripping positioning leverage 40 upwards and the stripping positioning leverage 40 drives the stripping positioning swing rod 44 to move the left end of the stripping strip 44 downwards to separate the stripping positioning swing rod 44 from the positioning surface of the gripper bar 7 so as to give a space such that the gripper bar 7 can move forward.

In this application, the power source of all the driving cams of the die-cutting machine is provided by the main motor of the die-cutting machine. The main motor drives the driving cam to rotate through the transmission system. The driving cam is fixed in the form of a keyway to the camshaft, so that the driving cam and the die-cutting machine can rotate synchronously.

Another embodiment of the present invention provides a die-cutting machine as described in the embodiment above further comprising successively-connected paper-conveying unit, the connection units between the die-cutting units, a finished product unit and a waste edge conveying unit.

The advantage of the die-cutting machine of the present invention is that: the rear positioning surface provided on the gripper bar cooperates with the corresponding reference surface and the reference axis to achieve precise positioning of the gripper bar. The tension springs in each module allow the driving cam to always fit tightly with the bearing so as to avoid the separation phenomenon.

The above descriptions are merely preferred embodiments of the present invention, but the scope of protection of the present invention is not limited thereto. The protection scope of the present invention is solely defined by the appended claims.

## Claims

1. A die-cutting machine comprising a gripper bar positioning device, a gripper bar (7) disposed on a chain, a stripping unit, and at least two sets of die-cutting units, the papers passing through the die-cutting units transported by the gripper bar (7), **characterized in that** the gripper bar positioning device comprises a front positioning module, a rear positioning module and a stripping unit positioning module; the front positioning module is disposed at the input end of the first set of die-cutting unit, the rear positioning module is disposed at the output end of each die-cutting unit, the stripping unit positioning module is disposed at the output end of the stripping unit, the front positioning module, the rear positioning module, the stripping unit positioning module each comprising a positioning swing rod (5, 19, 33, 44), the reference plane (10) of the positioning swing rod (5) of the front positioning module cooperating with the positioning surface (9) disposed behind the gripper bar (7), and the reference axis (19a, 33a, 44a) of the positioning swing rod (19, 33, 44) of the rear positioning module and the stripping unit positioning module cooperating with the positioning surface (9) disposed behind the gripper bar (7).

2. The die-cutting machine according to claim 1, **characterized in that** the front positioning module comprises a driving cam (1), a driving swing rod (2), a leverage (3), a tension spring (4), a positioning swing rod (5), a rotation shaft (6), a reference plane (10) and a bearing (11).

3. The die-cutting machine according to claim 2, **characterized by** the driving cam (1) of the front positioning module being driven in cooperation with the bearing (11), one end of the driving swing rod (2) disposed on the bearing (11), another end connected to one end of the leverage (3), the other end connected to the die-cutting machine; one end (4b) of the tension spring (4) connected to the leverage (3), the other end (4a) fixed to the die-cutting machine; the other end of the leverage (3) connected to one end of the positioning swing rod (5), the positioning swing rod (5) disposed on the rotation shaft (6), the other end of the positioning swing rod (5) provided with the reference plane (10) which cooperates with the positioning surface (9) of the gripper bar (7).

4. The die-cutting machine according to claim 1, **characterized by** the rear positioning module comprising a first set of rear positioning module disposed at the output end of the first set of die-cutting unit and a second set of rear positioning module disposed at the output end of the second set of die-cutting unit.

5. The die-cutting machine according to claim 4, **characterized by** the first set of rear positioning module comprising a driving unit, a leverage (14) and a swinging unit; the driving unit comprising a driving cam (101), a driving swing rod (12) and a driving bearing (13); the swing unit comprising a first swing rod (15), a second swing rod (17), a first swing leverage (16a), a second swing leverage (16b), a positioning leverage (18), a positioning swing rod (19), a swing tension spring (20), a positioning block (21) and a positioning tension spring (22); a reference axis (19a) disposed on the positioning swing rod (19).

6. The die-cutting machine according to claim 5, **characterized by** the driving cam (101) being driven in cooperation with the driving bearing (13); one end of the driving swing rod (12) connected to the driving bearing (13), the other end of the driving swing rod (12) connected to one end of the leverage (14); the other end of the leverage (14) connected to one end of the first swing rod (15), another end of the first swing rod (15) connected to one end of the first swing leverage (16a), the other end of the first swing rod (15) connected to the positioning tension spring (22); the other end of the first swing leverage (16a) connected to one end of the second swing leverage (16b), the other end of the second swing leverage (16b) connected to the positioning leverage (18) and the second swing rod (17) at the same time, the other end of the positioning leverage (18) connected to one end of the positioning swing rod (19), the other end of the positioning swing rod (19) connected to the positioning block (21), the positioning block (21) fixed on the die-cutting machine, one end (20b) of the swing tension spring (20) connected to the second swing rod (17), the other end (20a) of the swing tension spring (20) connected to the die-cutting machine, the positioning swing rod (19) cooperating with the positioning surface (9) behind the gripper bar (7) through the reference axis (19a).

7. The die-cutting machine according to claim 4, **characterized by** the second set of rear positioning module comprising a drive unit, a drive leverage (27), a swing unit, a positioning leverage (32) and a positioning swing rod (33); the drive unit comprising a driving cam (24), a driving swing rod (25) and a driving bearing (26); the swing unit comprising a first swing rod (28a), a second swing rod (28b), a third swing rod (29), a swing leverage (30), a swing tension spring (31) and a swing rod tension spring (60), a reference axis (33a) and a positioning block (34) disposed on the positioning swing rod (33).

8. The die-cutting machine according to claim 7, **characterized by** the driving cam (24) being driven in cooperation with the driving bearing (26); one end of the driving swing rod (25) connected to the driving bearing (26), the other end of the driving swing rod (25) connected to one end of the drive leverage (27), the other end of the drive leverage (27) connected to one end of the first swing rod (28a), the other end of the first swing rod (28a) connected to one end of the second swing rod (28b), the other end of the second swing rod (28b) connected to one end of the swing leverage (30), the other end of the swing leverage (30) connected to one end of the positioning leverage (32) and one end of the third swing rod (29) at the same time, the other end of the positioning leverage (32) connected to one end of the positioning swing rod (33), one end (31b) of the swing tension spring (31) connected to the first swing rod (28a), the other end (31a) of the swing tension spring (31) connected to the die-cutting machine; the lower end (60b) of the swing rod tension spring (60) connected to the other end of the third swing rod (29), the upper end (60a) of the swing rod tension spring (60) fixed to the die-cutting machine, the positioning swing rod (33) cooperating with the positioning surface (9) disposed behind the gripper bar (7) through the reference axis (33a).

9. The die-cutting machine according to any one of claim 1-8, **characterized by** the stripping unit positioning module comprising a stripping drive unit, a swing unit and a stripping positioning unit; the stripping drive unit comprising a driving cam (24), a stripping driving swing rod (35) and a stripping driving bearing (36); the swing unit comprises a first stripping leverage (37), a second stripping leverage (38), a third stripping leverage (39), a first stripping swing rod (41), a second stripping swing rod (42), a third stripping swing rod (43), a first stripping tension spring (45) and a second stripping tension spring (70); the stripping positioning unit comprises a stripping positioning leverage (40) and a stripping positioning swing rod (44); the reference axis (44a) disposed on the stripping positioning swing rod (44).

10. The die-cutting machine according to claim 9, **characterized by** the driving cam (24) comprised in the stripping drive unit of the stripping unit positioning module being driven in cooperation with the stripping driving bearing (36); one end of the stripping driving swing rod (35) connected to the stripping driving bearing(36), the other end of the stripping driving swing rod (35) connected to one end of the first stripping leverage (37), the other end of the first stripping leverage (37) connected to one end of the first stripping swing rod (41), the other end of the first stripping swing rod (41) connected to one end of the second stripping leverage (38), the other end of the second stripping leverage (38) connected to one end of the second stripping swing rod (42), the other end of the second stripping swing rod (42) connected to one end of the third stripping leverage (39), the other end of the third stripping leverage (39) connected to one end of the third stripping swing rod (43), the other end of the third stripping swing rod (43) connected to the stripping positioning leverage (40), the other end of the stripping positioning leverage (40) connected to one end of the stripping positioning swing rod (44), one end (45a) of the first stripping tension spring (45) connected to one end of the third positioning swing rod (43), the other end (45b) of the first stripping tension spring (45) connected to the die-cutting machine; the upper end (70a) of the second stripping tension spring (70) connected to one end of the first stripping swing rod (41), the lower end (70b) of the second stripping tension spring (70) fixed to the die-cutting machine, the gripper bar (7) provided with the gripper bar positioning surface (9) which is cooperatively used with the reference axis (44a) of the positioning swing rod (44).

11. The die-cutting machine according to anyone of claim 1-10, **characterized in that** the die-cutting machine further comprises successively-connected paper-conveying units, the connection units between the die-cutting units, a product finished unit and a waste edge conveying unit.

## Patentansprüche

1. Stanzvorrichtung mit einer Greiferstangen-Positioniervorrichtung, einer auf einer Kette angeordneten Greiferstange (7), einer Abstreifeinheit und mindestens zwei Sätzen von Stanzeinheiten, wobei durch die Stanzeinheiten verlaufende Papiere von der Greiferstange (7) transportiert werden,
**dadurch gekennzeichnet, dass**
die Greiferstangen-Positioniervorrichtung ein vorderes Positioniermodul, ein hinteres Positioniermodul und ein Abstreifeinheit-Positioniermodul aufweist; wobei das vordere Positioniermodul am Eingangsende des ersten Satzes von Stanzeinheiten angeordnet ist, das hintere Positioniermodul am Ausgangsende jeder Stanzeinheit angeordnet ist und das Abstreifeinheit-Positioniermodul am Ausgangsende der Abstreifeinheit angeordnet ist, wobei das vordere Positioniermodul, das hintere Positioniermodul und das Abstreifeinheit-Positioniermodul jeweils eine Positionierschwingstange (5, 19, 33, 44) aufweisen, wobei eine Bezugsebene (10) der Positionierschwingstange (5) des vorderen Positioniermoduls mit der hinter der Greiferstange (7) angeordneten Positionierfläche (9) zusammenwirkt und die Bezugsachse (19a, 33a, 44a) der Positionierschwingstange (19, 33, 44) des hinteren Positioniermoduls und des Abstreifeinheit-Positioniermoduls mit der hinter der Greiferstange (7) angeordneten Positionierfläche (9) zusammenwirkt.

2. Stanzvorrichtung nach Anspruch 1,
**dadurch gekennzeichnet, dass**
das vordere Positioniermodul einen Antriebsnocken (1), eine Antriebsschwingstange (2), einen Hebel (3), eine Zugfeder (4), eine Positionierschwingstange (5), eine Drehwelle (6), eine Bezugsebene (10) und ein Lager (11) aufweist.

3. Stanzvorrichtung nach Anspruch 2,
**dadurch gekennzeichnet, dass**
der Antriebsnocken (1) des vorderen Positioniermoduls in Zusammenarbeit mit dem Lager (11) angetrieben wird, wobei ein Ende der Antriebsschwingstange (2) auf dem Lager (11) angeordnet ist, ein anderes Ende mit einem Ende des Hebels (3) verbunden ist und das andere Ende mit der Stanzvorrichtung verbunden ist;
ein Ende (4b) der Zugfeder (4) mit dem Hebel (3) verbunden ist und das andere Ende (4a) mit der Stanzvorrichtung verbunden ist;
das andere Ende des Hebels (3) mit einem Ende der Positionierschwingstange (5) verbunden ist, wobei die Positionierschwingstange (5) auf der Drehwelle (6) angeordnet ist und das andere Ende der Positionierschwingstange (5) mit der Bezugsebene (10) versehen ist, die mit der Positionierfläche (9) der Greiferstange (7) zusammenwirkt.

4. Stanzvorrichtung nach Anspruch 1,
**dadurch gekennzeichnet, dass**
das hintere Positioniermodul einen ersten Satz des hinteren Positioniermoduls umfasst, der am Ausgangsende des ersten Satzes von Stanzeinheiten angeordnet ist, und einen zweiten Satz des hinteren Positioniermoduls, der am Ausgangsende des zweiten Satzes von Stanzeinheiten angeordnet ist.

5. Stanzvorrichtung nach Anspruch 4,
**dadurch gekennzeichnet, dass**
der erste Satz des hinteren Positioniermoduls eine Antriebseinheit, einen Hebel (14) und eine Schwingeinheit aufweist; wobei
die Antriebseinheit einen Antriebsnocken (101), eine Antriebsschwingstange (12) und ein Antriebslager (13) aufweist; und
die Schwingeinheit eine erste Schwingstange (15), eine zweite Schwingstange (17), einen ersten Schwinghebel (16a), einen zweiten Schwinghebel (16b), einen Positionierhebel (18), eine Positionierschwingstange (19), eine Schwingzugfeder (20), einen Positionierblock (21) und eine Positionierzugfeder (22) umfasst; wobei sich eine Bezugsachse (19a) auf der Positionier-Schwingstange (19) befindet.

6. Stanzvorrichtung nach Anspruch 5,
**dadurch gekennzeichnet, dass**
der Antriebsnocken (101) in Zusammenarbeit mit dem Antriebslager (13) angetrieben wird;
ein Ende der Antriebsschwingstange (12) mit dem Antriebslager (13) verbunden ist, das andere Ende der Antriebsschwingstange (12) mit einem Ende des Hebels (14) verbunden ist;
das andere Ende des Hebels (14) mit einem Ende der ersten Schwingstange (15) verbunden ist, ein anderes Ende der ersten Schwingstange (15) mit einem Ende des ersten Schwinghebels (16a) verbunden, das andere Ende der ersten Schwingstange (15) mit der Positionierzugfeder (22) verbunden ist; das andere Ende des ersten Schwinghebels (16a) mit einem Ende des zweiten Schwinghebels (16b) verbunden ist, das andere Ende des zweiten Schwinghebels (16b) gleichzeitig mit dem Positionierhebel (18) und der zweiten Schwingstange (17) verbunden ist, das andere Ende des Positionierhebels (18) mit einem Ende der Positionierschwingstange (19) verbunden ist, das andere Ende der Positionierschwingstange (19) mit dem Positionierblock (21) verbunden ist, wobei der Positionierblock (21) an der Stanzvorrichtung befestigt ist, ein Ende (20b) der Schwingzugfeder (20) mit der zweiten Schwingstange (17) verbunden ist, das andere Ende (20a) der Schwingzugfeder (20) mit der Stanzvorrichtung verbunden ist, und die Positionierschwingstange (19) mit der Positionierfläche (9) hinter der Greiferstange (7) durch die Bezugsachse (19a) zusammenwirkt.

7. Stanzvorrichtung nach Anspruch 4,
**dadurch gekennzeichnet, dass**
der zweite Satz des hinteren Positionierungsmoduls eine Antriebseinheit, einen Antriebshebel (27), eine Schwingeinheit, einen Positionierhebel (32) und eine Positionierschwingstange (33) aufweist; wobei
die Antriebseinheit einen Antriebsnocken (24), eine Antriebsschwingstange (25) und ein Antriebslager (26) aufweist;
die Schwingeinheit eine erste Schwingstange (28a), eine zweite Schwingstange (28b), eine dritte Schwingstange (29), einen Schwinghebel (30), eine Schwingzugfeder (31) und eine Schwingstabzugfeder (60), eine Bezugsachse (33a) und einen an der Positionierschwingstange (33) angeordneten Positionierblock (34) aufweist.

8. Stanzvorrichtung nach Anspruch 7,
**dadurch gekennzeichnet, dass**
der Antriebsnocken (24) in Zusammenarbeit mit dem Antriebslager (26) angetrieben wird; wobei ein Ende der Antriebsschwingstange (25) mit dem Antriebslager (26) verbunden ist, das andere Ende der Antriebsschwingstange (25) mit einem Ende des Antriebshebels (27) verbunden ist, das andere Ende des Antriebshebels (27) mit einem Ende der ersten Schwingstange (28a) verbunden ist, das andere Ende der ersten Schwingstange (28a) mit einem Ende der zweiten Schwingstange (28b) verbunden ist, das andere Ende der zweiten Schwingstange (28b) mit einem Ende des Schwinghebels (30) verbunden ist, das andere Ende des Schwinghebels (30) gleichzeitig mit einem Ende des Positionierhebels (32) und einem Ende der dritten Schwingstange (29) verbunden ist, das andere Ende des Positionierhebels (32) mit einem Ende der Positionierschwingstange (33) verbunden ist, ein Ende (31b) der Schwingzugfeder (31) mit der ersten Schwingstange (28a) verbunden ist, das andere Ende (31a) der Schwingzugfeder (31) mit der Stanzvorrichtung verbunden ist; das untere Ende (60b) der Schwingstangenzugfeder (60) mit dem anderen Ende der dritten Schwingstange (29) verbunden ist, wobei das obere Ende (60a) der Schwingstangenzugfeder (60) an der Stanzvorrichtung befestigt ist, wobei die Positionierschwingstange (33) durch die Bezugsachse (33a) mit der Positionierfläche (9) zusammenwirkt, die hinter der Greiferstange (7) angeordnet ist.

9. Stanzvorrichtung nach einem der Ansprüche 1-8,
**dadurch gekennzeichnet, dass**
das Abstreifeinheit-Positioniermodul eine Abstreifantriebseinheit, eine Schwingeinheit und eine Abstreifpositioniereinheit aufweist; wobei
die Abstreifantriebseinheit einen Antriebsnocken (24), eine Abstreifantriebsschwingstange (35) und ein Abstreifantriebslager (36) aufweist;
die Schwingeinheit einen ersten Abstreifhebel (37), einen zweiten Abstreifhebel (38), einen dritten Abstreifhebel (39), eine erste Abstreifschwingstange (41), eine zweite Abstreifschwingstange (42), eine dritte Abstreifschwingstange (43), eine erste Abstreifzugfeder (45) und eine zweite Abstreifzugfeder (70) aufweist; und
die Abstreifpositioniereinheit einen Abstreifpositionierhebel (40) und eine Abstreifpositionierschwingstange (44) aufweist; und die Bezugsachse (44a) auf der Abstreifpositionierschwingstange (44) angeordnet ist.

10. Stanzvorrichtung nach Anspruch 9,
**dadurch gekennzeichnet, dass**
der in der Abstreifantriebseinheit des Abstreif-Positioniermoduls befindliche Antriebsnocken (24) in Zusammenarbeit mit dem Abstreifantriebslager (36) angetrieben wird; wobei
ein Ende der Abstreifantriebsschwingstange (35) mit dem Abstreifantriebslager (36) verbunden ist, das andere Ende der Abstreifantriebsschwingstange (35) mit einem Ende des ersten Abstreifhebels (37) verbunden ist, das andere Ende des ersten Abstreifhebels (37) mit einem Ende der ersten Abstreifschwingstange (41) verbunden ist, das andere Ende der ersten Abstreifschwingstange (41) mit einem Ende des zweiten Abstreifhebels (38) verbunden ist, das andere Ende des zweiten Abstreifhebels (38) mit einem Ende der zweiten Abstreifschwingstange (42) verbunden ist, das andere Ende der zweiten Abstreifschwingstange (42) mit einem Ende des dritten Abstreifhebels (39) verbunden ist, das andere Ende des dritten Abstreifhebels (39) mit einem Ende der dritten Abstreifschwingstange (43) verbunden ist, das andere Ende der dritten Abstreifschwingstange (43) mit dem Abstreifpositionierhebel (40) verbunden ist, das andere Ende des Abstreifpositionierhebels (40) mit einem Ende der Abstreifpositionierschwingstange (44) verbunden ist, ein Ende (45a) der ersten Abstreifzugfeder (45) mit einem Ende der dritten Positionierschwingstange (43) verbunden ist, das andere Ende (45b) der ersten Abstreifzugfeder (45) mit der Stanzvorrichtung verbunden ist; das obere Ende (70a) der zweiten Abstreifzugfeder (70) mit einem Ende der ersten Abstreifschwingstange (41) verbunden ist, das untere Ende (70b) der zweiten Abstreifzugfeder (70) an der Stanzvorrichtung befestigt ist, und die Greiferstange (7) mit der Greiferstangenpositionierfläche (9) versehen ist, die mit der Bezugsachse (44a) der Positionierschwingstange (44) zusammenwirkt.

11. Stanzvorrichtung nach einem der Ansprüche 1 bis 10,
**dadurch gekennzeichnet, dass**
die Stanzvorrichtung weiterhin aufeinanderfolgend verbundene Papiertransporteinheiten, die Verbindungseinheiten zwischen den Stanzeinheiten, eine Produktfertigstellungseinheit und eine Ausschusskantentransporteinheit aufweist.

## Revendications

1. Machine de découpage à l'emporte-pièce comprenant un dispositif de positionnement de barre de préhension, une barre de préhension (7) disposée sur une chaîne, une unité d'élimination de déchets, et au moins deux ensembles d'unités de découpage à l'emporte-pièce, les papiers passant à travers les unités de découpage à l'emporte-pièce en étant transportés par la barre de préhension (7), **caractérisée en ce que** le dispositif de positionnement de barre de préhension comprend un module de positionnement avant, un module de positionnement arrière et un module de positionnement d'unité d'élimination de déchets ; le module de positionnement avant est disposé au niveau de l'extrémité d'entrée du premier ensemble d'unité de découpage à l'emporte-pièce, le module de positionnement arrière est disposé au niveau de l'extrémité de sortie de chaque unité de découpage à l'emporte-pièce, le module de positionnement d'unité d'élimination de déchets est disposé au niveau de l'extrémité de sortie de l'unité d'élimination de déchets, le module de positionnement avant, le module de positionnement arrière, le module de positionnement d'unité d'élimination de déchets comprenant chacun une tige à bascule de positionnement (5, 19, 33, 44), le plan de référence (10) de la tige à bascule de positionnement (5) du module de positionnement avant coopérant avec la surface de positionnement (9) disposée derrière la barre de préhension (7), et l'axe de référence (19a, 33a, 44a) de la tige à bascule de positionnement (19, 33, 44) du module de positionnement arrière et du module de positionnement d'unité d'élimination de déchets coopérant avec la surface de positionnement (9) disposée derrière la barre de préhension (7).

2. Machine de découpage à l'emporte-pièce selon la revendication 1, **caractérisée en ce que** le module de positionnement avant comprend une came d'entraînement (1), une tige à bascule d'entraînement (2), un levier (3), un ressort de tension (4), une tige à bascule de positionnement (5), un arbre de rotation (6), un plan de référence (10) et un palier (11).

3. Machine de découpage à l'emporte-pièce selon la revendication 2, **caractérisée par** la came d'entraînement (1) du module de positionnement avant qui est entraînée en coopération avec le palier (11), une extrémité de la tige à bascule d'entraînement (2) disposée sur le palier (11), une autre extrémité reliée à une extrémité du levier (3), l'autre extrémité reliée à la machine de découpage à l'emporte-pièce ; une extrémité (4b) du ressort de tension (4) reliée au levier (3), l'autre extrémité (4a) fixée à la machine de découpage à l'emporte-pièce ; l'autre extrémité du levier (3) reliée à une extrémité de la tige à bascule de positionnement (5), la tige à bascule de positionnement (5) disposée sur l'arbre de rotation (6), l'autre extrémité de la tige à bascule de positionnement (5) munie du plan de référence (10) qui coopère avec la surface de positionnement (9) de la barre de préhension (7).

4. Machine de découpage à l'emporte-pièce selon la revendication 1, **caractérisée par** le module de positionnement arrière comprenant un premier ensemble de module de positionnement arrière disposé au niveau de l'extrémité de sortie du premier ensemble d'unité de découpage à l'emporte-pièce et un second ensemble de module de positionnement arrière disposé au niveau de l'extrémité de sortie du second ensemble d'unité de découpage à l'emporte-pièce.

5. Machine de découpage à l'emporte-pièce selon la revendication 4, **caractérisée par** le premier ensemble de module de positionnement arrière comprenant une unité d'entraînement, un levier (14) et une unité de basculement ; l'unité d'entraînement comprenant une came d'entraînement (101), une tige à bascule d'entraînement (12) et un palier d'entraînement (13) ; l'unité de basculement comprenant une première tige à bascule (15), une deuxième tige à bascule (17), un premier levier de basculement (16a), un second levier de basculement (16b), un levier de positionnement (18), une tige à bascule de positionnement (19), un ressort de tension de basculement (20), un bloc de positionnement (21) et un ressort de tension de positionnement (22) ; un axe de référence (19a) disposé sur la tige à bascule de positionnement (19).

6. Machine de découpage à l'emporte-pièce selon la revendication 5, **caractérisée par** la came d'entraînement (101) qui est entraînée en coopération avec le palier d'entraînement (13) ; une extrémité de la tige à bascule d'entraînement (12) reliée au palier d'entraînement (13), l'autre extrémité de la tige à bascule d'entraînement (12) reliée à une extrémité du levier (14) ; l'autre extrémité du levier (14) reliée à une extrémité de la première tige à bascule (15), une autre extrémité de la première tige à bascule (15) reliée à une extrémité du premier levier de basculement (16a), l'autre extrémité de la première tige à bascule (15) reliée au ressort de tension de positionnement (22) ; l'autre extrémité du premier levier de basculement (16a) reliée à une extrémité du second levier de basculement (16b), l'autre extrémité du second levier de basculement (16b) reliée au levier de positionnement (18) et à la deuxième tige à bascule (17) en même temps, l'autre extrémité du levier de positionnement (18) reliée à une extrémité de la tige à bascule de positionnement (19), l'autre extrémité de la tige à bascule de positionnement (19) reliée au bloc de positionnement (21), le bloc de positionnement (21) fixé sur la machine de découpage à l'emporte-pièce, une extrémité (20b) du ressort de tension de basculement (20) reliée à la deuxième tige à bascule (17), l'autre extrémité (20a) du ressort de tension de basculement (20) reliée à la machine de découpage à l'emportepièce, la tige à bascule de positionnement (19) coopérant avec la surface de positionnement (9) derrière la barre de préhension (7) par l'intermédiaire de l'axe de référence (19a).

7. Machine de découpage à l'emporte-pièce selon la revendication 4, **caractérisée par** le second ensemble de module de positionnement arrière comprenant une unité d'entraînement, un levier d'entraînement (27), une unité de basculement, un levier de positionnement (32) et une tige à bascule de positionnement (33) ; l'unité d'entraînement comprenant une came d'entraînement (24), une tige à bascule d'entraînement (25) et un palier d'entraînement (26) ; l'unité de basculement comprenant une première tige à bascule (28a), une deuxième tige à bascule (28b), une troisième tige à bascule (29), un levier de basculement (30), un ressort de tension de basculement (31) et un ressort de tension de tige à bascule (60), un axe de référence (33a) et un bloc de positionnement (34) disposé sur la tige à bascule de positionnement (33).

8. Machine de découpage à l'emporte-pièce selon la revendication 7, **caractérisée par** la came d'entraînement (24) qui est entraînée en coopération avec le palier d'entraînement (26) ; une extrémité de la tige à bascule d'entraînement (25) reliée au palier d'entraînement (26), l'autre extrémité de la tige à bascule d'entraînement (25) reliée à une extrémité du levier d'entraînement (27), l'autre extrémité du levier d'entraînement (27) reliée à une extrémité de la première tige à bascule (28a), l'autre extrémité de la première tige à bascule (28a) reliée à une extrémité de la deuxième tige à bascule (28b), l'autre extrémité de la deuxième tige à bascule (28b) reliée à une extrémité du levier de basculement (30), l'autre extrémité du levier de basculement (30) reliée à une extrémité du levier de positionnement (32) et à une extrémité de la troisième tige à bascule (29) en même temps, l'autre extrémité du levier de positionnement (32) reliée à une extrémité de la tige à bascule de positionnement (33), une extrémité (31b) du ressort de tension de basculement (31) reliée à la première tige à bascule (28a), l'autre extrémité (31a) du ressort de tension de basculement (31) reliée à la machine de découpage à l'emporte-pièce ; l'extrémité inférieure (60b) du ressort de tension de tige à bascule (60) reliée à l'autre extrémité de la troisième tige à bascule (29), l'extrémité supérieure (60a) du ressort de tension de tige à bascule (60) fixée à la machine de découpage à l'emporte-pièce, la tige à bascule de positionnement (33) coopérant avec la surface de positionnement (9) disposée derrière la barre de préhension (7) par l'intermédiaire de l'axe de référence (33a).

9. Machine de découpage à l'emporte-pièce selon une quelconque des revendications 1 à 8, **caractérisée par** le module de positionnement d'unité d'élimination de déchets comprenant une unité d'entraînement d'élimination de déchets, une unité de basculement et une unité de positionnement d'élimination de déchets ; l'unité d'entraînement d'élimination de déchets comprenant une came d'entraînement (24), une tige à bascule d'entraînement d'élimination de déchets (35) et un palier d'entraînement d'élimination de déchets (36) ; l'unité de basculement comprend un premier levier d'élimination de déchets (37), un deuxième levier d'élimination de déchets (38), un troisième levier d'élimination de déchets (39), une première tige à bascule d'élimination de déchets (41), une deuxième tige à bascule d'élimination de déchets (42), une troisième tige à bascule d'élimination de déchets (43), un premier ressort de tension d'élimination de déchets (45) et un second ressort de tension d'élimination de déchets (70) ; l'unité de positionnement d'élimination de déchets comprend un levier de positionnement d'élimination de déchets (40) et une tige à bascule de positionnement d'élimination de déchets (44) ; l'axe de référence (44a) disposé sur la tige à bascule de positionnement d'élimination de déchets (44).

10. Machine de découpage à l'emporte-pièce selon la revendication 9, **caractérisée par** la came d'entraînement (24) comprise dans l'unité d'entraînement d'élimination de déchets du module de positionnement d'unité d'élimination de déchets qui est entraînée en coopération avec le palier d'entraînement d'élimination de déchets (36) ; une extrémité de la tige à bascule d'entraînement d'élimination de déchets (35) reliée au palier d'entraînement d'élimination de déchets (36), l'autre extrémité de la tige à bascule d'entraînement d'élimination de déchets (35) reliée à une extrémité du premier levier d'élimination de déchets (37), l'autre extrémité du premier levier d'élimination de déchets (37) reliée à une extrémité de la première tige à bascule d'élimination de déchets (41), l'autre extrémité de la première tige à bascule d'élimination de déchets (41) reliée à une extrémité du deuxième levier d'élimination de déchets (38), l'autre extrémité du deuxième levier d'élimination de déchets (38) reliée à une extrémité de la deuxième tige à bascule d'élimination de déchets (42), l'autre extrémité de la deuxième tige à bascule d'élimination de déchets (42) reliée à une extrémité du troisième levier d'élimination de déchets (39), l' autre extrémité du troisième levier d'élimination de déchets (39) reliée à une extrémité de la troisième tige à bascule d'élimination de déchets (43), l'autre extrémité de la troisième tige à bascule d'élimination de déchets (43) reliée au levier de positionnement d'élimination de déchets (40), l'autre extrémité du levier de positionnement d'élimination de déchets (40) reliée à une extrémité de la tige à bascule de positionnement d'élimination de déchets (44), une extrémité (45a) du premier ressort de tension d'élimination de déchets (45) reliée à une extrémité de la troisième tige à bascule de positionnement (43), l'autre extrémité (45b) du premier ressort de tension d'élimination de déchets (45) reliée à la machine de découpage à l'emporte-pièce ; l'extrémité supérieure (70a) du second ressort de tension d'élimination de déchets (70) reliée à une extrémité de la première tige à bascule d'élimination de déchets (41), l'extrémité inférieure (70b) du second ressort de tension d'élimination de déchets (70) fixée à la machine de découpage à l'emporte-pièce, la barre de préhension (7) munie de la surface de positionnement de barre de préhension (9) qui est utilisée en coopération avec l'axe de référence (44a) de la tige à bascule de positionnement (44).

11. Machine de découpage à l'emporte-pièce selon une quelconque des revendications 1 à 10, **caractérisée en ce que** la machine de découpage à l'emporte-pièce comprend en outre des unités de transport de papier reliées de manière successive, les unités de liaison entre les unités de découpage à l'emporte-pièce, une unité de produits finis et une unité de transport en bordure des déchets.
